# EUROPEAN PATENT APPLICATION

(11) **EP 2 278 423 A2**
(43) Date of publication of application: **26.01.2011**
(21) Application number: 10012365.2
(22) Date of filing: 10.08.2006
(51) Int. Cl.: G05B 19/04, A47L 15/42, D06F 33/02, D06F 39/00

(54) **Home appliance with ambience detector and ambience dependent operation**

(62) Divisional of application: 06016682.4
(71) Applicant: Electrolux Home Products Corporation N.V., 1930 Zaventem (BE)
(72) Inventor: Steiner, Winfried, 90491 Nürnberg (DE); Stahlmann, Rolf, 91639 Wolframs-Eschenbach (DE); Füglein, Stefan, 90427 Nürnberg (DE); Lampe, Hansjörg, 90491 Nürnberg (DE); Forst, Klaus-Martin, 89423 Peterswörth (DE)
(74) Representative: Röder, Richard

(57) **Abstract**

The invention relates to a home appliance, in particular a dishwasher (2), a dryer or a washing machine, comprising a control unit (4, 12) adapted to control at least one program sequence of the home appliance (2); and at least one ambient condition sensor (14, 16, 18) adapted to detect an ambient condition and to supply an ambient sensor signal to the control unit (4, 12); wherein the control unit (4, 12) is adapted to modify at least one of the program sequences in dependency of the ambient sensor signal. The invention further relates to a method of operating a home appliance, in particular a dishwasher (2), a dryer, a washing machine or a home appliance, comprising detecting at least one ambient condition using at least one ambient condition sensor (14, 16, 18) modifying at least one program sequence parameter in dependency of the at least one detected ambient sensor signal.

## Description

The invention relates to a home appliance, in particular to a dishwashing machine, a dryer or a washing machine, having at least one ambience or ambient detector for detecting an ambience or ambient condition; and it relates to a method of operating a home appliance in dependency of an ambient condition.

A prior art dishwashing machine is known, in which the user can select at an input operation panel of the dishwasher, a so-called "night cycle" or "Nachtprogramm", which, when selected, causes a control unit of the dishwashing machine to execute a night washing program. In the night washing program the components of the dishwashing machine are operated in a mode generating lower noise levels as compared to the standard washing programs. Particularly in small flats where the distance between the kitchen where the dishwasher is placed and the sleeping room is short, the reduced noise generation during the night program increases the user comfort by not disturbing the sleeping user.

Another dishwasher is known which has a movement sensor to detect whether there is a user close to the dishwasher. As soon as the movement sensor detects a movement, an energy saving or sleeping mode of a display panel of the dishwasher is switched to a ready or stand-by mode, wherein the energy consumption in the sleeping mode is reduced as compared to the stand-by mode. However, the signal of the movement sensor does not affect any of the washing programs which may be activated by the user or which may be currently running.

It is an object of the invention to provide a home appliance and a method of operating it, having an improved user comfort by responding to ambient conditions. Specifically, it is an object of the invention to provide a home appliance or a method which adapt the noise generation of the home appliance according to ambient conditions.

The invention is a domestic dishwasher, dryer or washing machine as it is defined in claim 1 and a method of operating a domestic dishwasher, dryer or washing machine as it is defined in claim 10.

Particular embodiments are set out in the dependent claims.

According to claim 1, a program-controlled home appliance is provided, which has at least one ambient condition sensor detecting an ambient condition of the surroundings outside the home appliance. At least one ambient sensor signal from the at least one ambient condition sensor is supplied to the control unit of the home appliance for further processing. Further processing means that the control unit detects the supplied ambient sensor signal and reacts e.g. onto the status, the characteristics or the level of the at least one ambient sensor signal, and correspondingly modifies at least one of the program sequences controlled by the control unit. The at least one sensor signal may be an analog signal, i.e. a signal having monotone signal levels, a digital signal, a discrete signal or the like. The signal may be transmitted from the ambient condition sensor to the control unit via a wire or fibre or by contactless transmission.

The dishwasher, dryer or washing machine in accordance with the present invention is adapted to provide for counter measures or compensation measures initiated by the control unit of the home appliance in order to modify the at least one program sequence in dependency of the at least one ambient sensor signal in such a way that the operation or work result of the executed program sequence is minimally or not affected due to the modification taken in dependency of the at least one ambient sensor signal. This means that, although the at least one program sequence is modified in reaction to the at least one ambient sensor signal to improve the user comfort (for example in respect of noise generation of the home appliance), the final result of the program run should not be affected thereby. For example, the washing result of a main wash of e.g. dishes or laundry is the same, independent of whether the at least one program sequence has been modified in response to an ambient signal or not.

In accordance with the present invention the modification of the at least one program sequence relates to a first program parameter modified due to the ambient conditions, wherein for compensating the effects of the modification in the first program parameter at least one second program parameter is additionally modified.

The program sequence particularly can be a washing, a dish washing, a laundry washing and/or a drying sequence or a subsequence or partial sequence thereof.

If, for example, the ambient sensors detect a low ambient noise level and if in response thereto (first program parameter) the rotation speed of a circulation pump (dishwasher) or the rotation speed of a motor driving the drum (washing machine or dryer) is reduced to reduce the noise generation by the home appliance, the fluid temperature (water or washing liquid temperature) or an air temperature (dryer) can be increased to achieve the same washing or drying result. If, for example, the circulation speed of the washing water in a dishwasher is reduced, the washing result is normally reduced due to the reduced mechanical power of the liquid sprayed by the spray arms. One exemplary measure to compensate this is an increased washing liquid temperature which will then accelerate the soil removing effect of the washing liquid. Alternatively or additionally, the fluid circulation time or washing time is increased, when the drum rotation speed or the fluid circulation speed is reduced, such that due to the longer interaction time between the fluid and the laundry or dishes the decreased mechanical treatment of the laundry or dishes is compensated. In a further additional or alternative embodiment, for example, the fluid level in the sink of a dish washing tub is increased as a prevention measure for air from being sucked by the circulation pump (reducing noise generation) and as a compensation measure for the increased need for washing liquid used, the number of rinsing steps or rinsing runs is reduced, and/or a pre-wash subsequence of the program sequence is completely skipped. Thereby, the overall consumption of liquid or water during the complete program run is the same, although the water amount used in the main wash is higher as compared to standard conditions (when the program sequence is not modified due to the ambient conditions).

Thus, in preferred embodiments, the control unit is adapted to control at least one noise generating or inducing component to operate at a reducing or increasing noise generating or inducing level, when the level of, the frequency of, the incidence of and/or the occurrence of at least one ambient sensor signal is decreasing or increasing as compared to a normal ambient signal level, frequency or to the absence of the one ambient signal.

The ambient sensor signal can be preprocessed in the ambient sensor, for example by comparing the sensed ambient sensor signal to a predetermined value and to output a discrimination or comparison result. Or the sensor signal can be transmitted to the control unit where it is further processed for example in an I/O input port device of the control unit.

The modification of the at least one program sequence in dependency of the at least one ambient sensor signal may be made either continuously or monotonously in dependency of the ambient sensor signal i.e. in dependency of its level or value. Or it may be modified discretely in steps of predefined value ranges of the at least one ambient sensor signal level, or it may be made digitally in form of modifying the program sequence as soon as a predefined level or characteristic of a reference ambient sensor signal has been reached, exceeded or undershoot.

According to a preferred embodiment, the at least one ambient condition sensor is an optical sensor for detecting ambient light (for example artificial light by a room lamp or daylight coming in through a window into the kitchen); a sound detector detecting the sound level in the surroundings of the home appliance; a vibration detector detecting vibrations, for example caused by the user walking around in the flat; or a motion detector detecting the user's presence and/or motions in the surroundings of the home appliance.

Preferably, two or more of the sensors are combined to provide two or more ambient sensor signals for evaluating the ambient condition or the plausibility of ambient conditions to be used for modification of the at least one program sequence. For example, if noise reduction should be achieved by the modification of the program sequence, the signal of the motion detector is combined with the signal of the light detector to exclude the possibility that the kitchen light has not been cancelled, while actually the user is sleeping (no movement). On the other hand, sleeping mode (noise reduction during the running program sequence) is actuated, while the motion detector detects a low level of motion or only single-event movement (for example due to the movement of a pet in the dark kitchen).

If the sound detector is a voice detector, the signal is not analyzed for voice control of the home appliance but is used here for generating the ambient sensor signal used to modify the at least one program sequence, i.e. by outputting the noise energy to the control unit for modifying the program sequence. Preferably, the sound detector is a noise detector reacting only to a noise level or energy of the surroundings and not to specific audio or voice signals (i.e. it does not react onto the content or information of the audio signal, but only to the level of the signal).

In an embodiment the optical detector is a light intensity detector which for example may be sensitive to one or more predefined wavelength ranges. Preferably, by comparing different wavelength ranges it can be discriminated between daylight and artificial light, such that different intensity levels can be used to modify the program sequence in dependency whether it is daylight or artificial light. Thus the optical detector can be adapted to provide the ambient light sensor signal in dependency of the ambient light source and/or intensity, in particular in dependency of the ambient light being day light or artificial light.

In a preferred embodiment the at least one program sequence is modified in dependency of the time of the day or the day of the week indicated by a clock unit of the home appliance - in addition to the modification and in dependency of the at least one ambient sensor signal. By further taking the time of the day and/or the day of the week into consideration for the modification of the program sequence, for example, the degree of the modification of the program sequence in dependency of the ambient sensor signal can be modified and/or the levels for modifying the at least one program sequence in dependency of the ambient sensor signal can be shifted. If, for example, the modification of the program sequence is directed to reduce the noise generated by noise generating or inducing components of the home appliance, it can be predefined that on Saturday and Sunday they generally work at a reduced noise level as compared to working days. Or it can be defined that noise is generally reduced to a higher degree about noon.

Preferably, the modification of the at least one program sequence affects the operations of at least one noise generating or inducing component of the home appliance. In preferred embodiments the at least one noise generating component includes one or more of the following: a motor, a pump motor, a drain pump motor, a circulation pump motor, a fan driving motor, a drum driving motor, a valve, a water inlet valve, and a multi-stage switching valve. A noise generating or inducing component of the home appliance itself generates noise dissipating from the home appliance to the outside surroundings and possibly affecting the noise comfort of the user. For example, vibrating or rotating elements may cause vibrations of support or shielding elements of the home appliance, thereby inducing sound waves. Or, the noise inducing components may indirectly induce noise, for example, a spray arm of a dishwasher sprays water splashes onto the inside tub of the dishwasher, thereby periodically causing sound waves. The noise generation caused by water sprayed from the spray arms in turn is modified by the pumping speed of a circulation pump which can be operated at higher or lower rotation speeds to increase or decrease the noise caused by the fluid sprayed from the spray arm. Also, a low water level in a sink of the dish washing tub causes sucking air together with the fluid into the circulation pump, such that by increasing/lowering the water level in the sink the noise caused by sucked air into the circulation pump is decreased/increased. In a condenser and/or exhaust dryer for example, the air circulated through the drum and driven by a fan can cause noise generation normally increasing with increasing air flow being itself caused by increasing the driving speed of the fan. Therefore, noise generated in a dryer can be reduced/increased by reducing/increasing the fan driving speed. In a washing machine and a dryer the drum rotation causes not only driving noise but also noise of the laundry (dryer and washing machine) and the agitated fluid (washing machine), such that reducing the drum driving speed results in a reduced noise generation.

The noise generating or inducing level of the at least one noise generating or inducing component further can be reduced or increased by increasing or reducing a throttling effect of a component.

Therefore, in an embodiment of the invention the modification of the at least one program sequence is directed to the modification of at least one program parameter, wherein either the operation condition of at least one noise generating or inducing component is changed and/or any program parameter indirectly affecting the noise generation is modified.

Preferably, the modification of the at least one program sequence results in an increase/decrease of a noise generating or inducing level when an increase/decrease of an ambient sensor signal level is detected. This means that, preferably when ambient conditions detected by the at least one ambient signal detector indicate that an increased noise level of the home appliance is acceptable by the user or would not significantly bother the user, the control unit of the home appliance controls the execution of the at least one program sequence such that higher noises are generated by the home appliance, which normally results in shorter program execution times to achieve the same operation result of the home appliance (for example the same washing or drying result of the washing machine, dishwasher or dryer). Alternatively or additionally, if the ambient sensor signals indicate that it is preferred that the noise level is reduced, the control unit of the home appliance controls the execution of the at least one program sequence such that the home appliance generates a reduced noise level.

In preferred embodiments the control unit is adapted to modify the at least one program sequence, in particular to control the at least one noise generating or inducing component, such that the noise level generated by the domestic dishwasher, dryer or washing machine, in particular by the at least one noise generating or inducing component, is below the detected ambient noise level, in particular at least 2, 3, 4 or 5 dB below the detected ambient noise level.

According to a preferred embodiment the presence or absence of a user in the vicinity of the home appliance (e.g. kitchen or washroom) is detected, preferably by a movement or motion detector. As soon as a movement is detected, the home appliance is operated in a quiet mode such that the user is not bothered by loud noise generated from the home appliance. To this end the control unit can be adapted to control at least one noise generating or inducing component to operate at a reduced generating or inducing level when the movement signal of the motion detector indicates a single movement event, a plurality or repeated movement events and/or a predefined level of movement events. If for example the user has his dishwasher in a combined dining room/kitchen it is pleasing when the dishwasher operates in a mute mode while the user is near. On the other hand when the user leaves the kitchen, the dishwasher can resume normal operation or noise-up operation.

Preferably two or more sensor signals are combined for a further optimized adaptation to ambient conditions. For example a modification of the program sequence to higher noise generating levels in response to an increased ambient noise level is dampened or suppressed when at the same time a movement is detected close to the dishwasher. If for example the increased noise is remote to the home appliance (passing aircraft or train) it is not desirable to contribute to this noise by the home appliance when the user is close as detected by the movement sensor.

In preferred embodiments the home appliance includes a means indicating an internal condition (for example internal condition sensor, clock unit, user input signal) being additionally taken into consideration when modifying the at least one program sequence in dependency of the at least one ambient sensor signal.

The home appliance can comprise at least one internal condition sensor detecting an internal condition of the home appliance, wherein the internal sensor signal is fed to the control unit and/or to a comparator unit of the home appliance, which is itself preferably connected to the control unit modifying the at least one program sequence. In a preferred embodiment a differential or comparison processing of at least one ambient signal and at least one internal signal is performed, and a processing result is then used to modify the at least one program sequence instead of modifying the at least one program sequence in direct dependency of the at least one ambient signal. To this end the domestic dishwasher, dryer or washing machine can comprise a comparator unit adapted to receive at least one ambient signal and at least one internal signal, in particular an internal signal of an internal condition sensor, to compare the at least one ambient signal and the at least one internal signal, and to provide a comparison signal to the control unit, wherein the control unit is adapted to modify the at least one program sequences in dependency of the comparison signal instead of the ambient sensor signal. Preferably, the internal condition sensor is a sound sensor and/or a vibration sensor, such that, for example, the differential consideration of an internal noise level and an outside noise level (ambient noise level) is used for the modification of the at least one program sequence. For example and in a simplified consideration, if the ambient noise level is very high, the home appliance is allowed to operate at a correspondingly high internal noise level, i.e. the home appliance can produce more noise, when the surrounding or ambience is noisy. Additionally or alternatively, if the surrounding noise level is very low, the home appliance is forced by the control unit to operate at a correspondingly reduced noise generation level.

In a preferred embodiment the control unit is adapted to modify the at least one program sequence, in particular to control the at least one noise generating or inducing component , such that the internal noise level detected by the sound sensor and/or vibration sensor is below the detected ambient noise level, in particular at least 2, 3, 4 or 5 dB below the detected ambient noise level.

In a preferred embodiment the home appliance comprises a user-operable input unit connected to the control unit, such that user inputs are transmitted to the control unit. A specific user input signal is provided, which, when input or according to the user input, will additionally modify the at least one program sequence (in addition to the dependency of the program sequence on the at least one ambient sensor signal). For example, by the user input signal the modification in dependency of the at least one ambient condition signal can be completely suppressed, such that only standard program sequences are executed by the control unit. Alternatively or additionally, one out of a plurality of ambient condition signals can be deactivated by the user input - for example, the ambient light sensitivity of the program modification can be deactivated, such that a program modification is only made in dependency of a movement sensor signal. In a preferred embodiment the dependency of the modification on the ambient sensor signal level or degree can be modified by the user, such that an adaptive ambient condition control is optimized to the user's need. For example, the user will generally allow more noise to be reduced by the dishwashing machine when, for example, sleeping distant to the dishwasher. Or the user can adapt the dynamics of the modification. For example, the noise increase/reduction degree can be set to be more or less dependent on the ambient noise level. Such a modification of the dynamic adaptability is known from car audio systems where the user can input whether the audio volume level should be more or less increased in dependency of the noise level of the car (for example measured by the driving speed).

Preferably the domestic dishwasher, dryer or washing machine comprises an output unit adapted to provide at least one output or indicator signal for a user, wherein the control unit is further adapted to modify at least one output signal state in dependency of the ambient sensor signal. In particular, if one indicator signal is an output optical signal, the control unit can be adapted to dim the brightness of the output optical signal in dependency of the detected ambient brightness. In case that one indicator signal is an audio or acoustical signal, the control unit can be adapted to adapt the sound level of the output audio or acoustical signal in dependency of the detected ambient sound signal.

In the method according to claim 33, at least one program sequence parameter of a program sequence is adapted in dependency of at least one ambient condition detected by at least one ambient condition sensor. The effects and embodiments described above in relation to the home appliance correspondingly apply also to the inventive method, such that reference is made to the above.

Reference is made in detail to preferred embodiments of the invention, examples of which are illustrated in the accompanying drawings, which show:
- Fig. 1: a schematic block diagram illustrating components for operating a dishwashing machine; and
- Fig. 2: a timetable for an illustrative dishwashing program and its modifications.

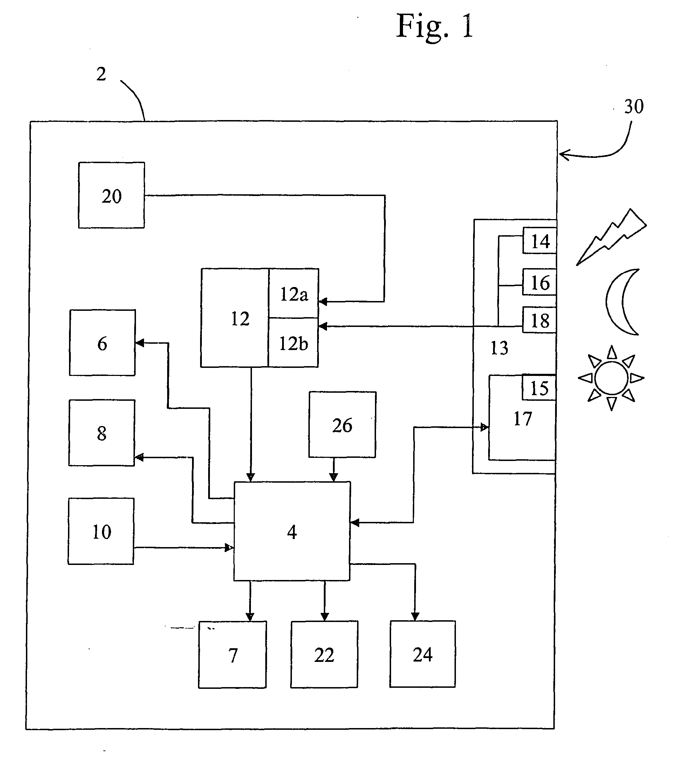

Fig. 1 shows a schematic block diagram of some of the functional components of a dishwashing machine 2. At a front side 30 of the dishwasher 2 a front panel 13 is arranged at the upper section of the loading door. The front panel 13 includes an operation panel 17 having a display unit to display operation conditions or user selections to a user, and a user input unit 15 having user-operable selectors, by means of which the user can select the different washing programs (main wash, intensive wash, night wash, energy saving wash etc.) and can activate and deactivate optional selections (upper/lower basket wash etc.). The user inputs are transmitted from the user input unit 15 to a central control unit 4 of the dishwasher, while the control unit 4 sends status signals to the operation panel 17 to indicate the operation conditions of the dishwasher (activated/deactivated, remaining washing time, selected program or program option, acoustic signals for malfunction or wrong user input etc.).

A draining pump 6 and a circulation pump 8 operate under the control of the control unit 4, wherein the driving electronics is not shown here for simplification. In dependency of the control signal from the control unit 4 the circulation pump 8 can pump at different pumping or motor speeds, such that the flow rates of the circulating washing liquid pumped from the sink of the washing tub to the spray arms of the dishwasher may be varied. The control unit 4 also controls the opening of inlet valve 7, wherein here the inlet valve can be operated in two opening states, such that the level of fresh water flow coming from the house supply and flowing into the washing tub can be switched between two flow rates. The first flow rate is lower than the second flow rate, such that the noise generated during the water inlet at the first flow rate is below the noise level during the water inlet at the second flow rate. Selecting the first or second flow rate depends on whether the dishwasher 2 should operate in a noise reduced mode (first flow rate) or in a standard noise or increased noise mode (second flow rate).

Control unit 4 also controls the heating of the washing liquid by a heater 24 and the condensation rate by circulating the humidity-laden air from the washing tub to pass at a condensation unit (not shown), when a circulation fan 22 is operated. Fan 22 sucks in the humid air at an upper port of the washing tub and passes the air through a channel where the humidity-laden air is condensed at a condenser unit and reintroduced into the washing tub through a channel connecting to a lower section of the washing tub. Fan 22 can also be operated in two driving speeds, wherein a first lower driving speed is used in a noise reduction mode and the higher driving speed is used in a standard or noise increased operation mode of the dishwasher.

A water level sensor 10 provides a water level signal to the control unit 4, such that the water level at the sink of the washing tub can be monitored and controlled by correspondingly operating inlet valve 7 and/or drain pump 6. For example, during fresh water inlet the water level is monitored and the inlet valve 7 is closed as soon as a predetermined water level in the washing tub has been achieved. Further, a timer 26 informs the control unit 4 about the time of the day and the day of the week, such that a night operation mode (night program) is automatically activated or deactivated in dependency of the time of the day, or a noise reduction mode is automatically activated or deactivated in the dependency of the time of the day and/or the day of the week. The signal from the timer 26 can be alternatively combined with external or internal signals (see below) to further optimize the user comfort during the operation of the dishwasher 2, when a modification of a program sequence additionally uses the information related to the time of the day or the day of the week in order to activate or deactivate the noise reduction or to determine to which degree the noise reduction or increase is desired or allowed.

In addition'to the operation panel 17 a microphone unit 14, a photo detector 16 and a movement detector 18 are arranged at the front panel 13. It is to be noted that in the exemplary embodiment described here all three sensor are provided with the dishwasher 2, however, in other embodiments only one of these sensors 14, 16 or 18, two of them or more than these three sensors may be provided. The three sensors 14, 16, 18 detect environmental or ambient conditions outside the body of the dishwasher 2, i.e. ambience or ambient conditions can be detected at the front side 30 of the dishwasher. The microphone unit 14 detects sound coming from the outside of the dishwasher 2, which is analyzed as noise, i.e. only the noise energy is further processed for the purposes of the present invention and no information contained in the audio signal is considered here. The photo detector 16 is here a photo diode detecting the light intensity of the surroundings being normally a kitchen of the user. The movement detector 18 detects movements of the user in front of the dishwasher 2 and operates, for example, on the basis of infrared ranging. The signals from the sensors 14, 16 and 18 are sent to a fuzzy logic unit 12 being itself connected to the control unit 4. The fuzzy logic 12 preprocesses the signals from the sensors and forwards a preprocessed sensor signal or a decision signal, which may be digital, analog or indicative of a numerical value to the control unit 4. Additionally, a signal from an internal noise/vibration sensor 20 is also sent to the fuzzy logic 12 for preprocessing. The internal noise/vibration sensor 20 detects the internal noise level generated internally during operation of the units of the dishwasher 2.

The fuzzy logic 12 comprises an I/O unit 12a which can transform or convert one or some of the signals from the sensors 14, 16, 18, 20, e.g. it amplifies the signals, filters (smooth) the signals, biases the signals, converts the signals (analog/digital) and electrically decouples the signals or the like. The fuzzy logic 12 may also include a comparator unit 12b where, for example, the noise level input by the microphone unit 14 and the noise level input by the internal sensor 20 are compared to or subtracted from each other, such that only the comparison result or the subtraction result is input to fuzzy processing or is directly forwarded to the control unit 4. The fuzzy logic 12 is adapted to preprocess one or more of the signals prior to forwarding it to the control unit 4. For example, two or more different types of sensor signals are combined to each other to provide a plausibility check of one signal by the other signal, or to combine them to more precisely and surely determine the modification required in response to the at least two detected ambient signals. Also typical signal structures or characteristics can be analyzed to conclude specific ambient conditions. If, for example, the movement sensor only reacts once for a short time, no modification is made, while, when a plurality of subsequent movement signals are detected, it is determined that there is a high 'activity' around the dishwasher 2, and, for example, the dishwasher can operate at a reduced noise level.

Noise level control can be made by the control unit 4 controlling components of the dishwashing machine 2, which themselves generate noise during their operation or which induce noise to be generated during their operation. For example, the drain pump 6, the circulation pump 8, the inlet valve 7 and fan 22 generate noise when being operated and as mentioned above. Noise generation can also be implicitly controlled by changing an operation parameter, e.g. the water level in the sink of the washing tub. With declining water level in the sink of the washing tub air bubbles are sucked by the circulation pump 8, wherein sucking and flowing the air bubbles through the pump, the conduits and the spray arms results in an increased noise generation. Therefore, noise generation can be increased by increasing the operation speed of the drain pump 6, circulation pump 8 or fan 22. Noise also increases, when the water level is decreased or when the water flow is increased at inlet valve 7. Noise reduction is achieved by a reduced operation speed of pumps 6 and 8 or fan 22 and increased water level in the washing tub or a reduced flow rate through inlet valve 7.

Of course, adapting one of the above mentioned parameters for noise reduction or increase does affect the washing result of the dishwashing machine 2 during executing a program sequence. If, for example, a washing program 'intensive' is used to clean heavily soiled dishes (pots or the like), then a decrease of the pumping speed of circulation pump 8 results in less mechanical power of the liquid sprayed by the spray arms due to the reduction in circulation flow rate. On the other hand, if for example the circulation pump 8 operates at a higher speed, the mechanical cleaning effect of the sprayed liquid is improved. As a counter measure to the decrease or increase of the cleaning effect when changing the circulation pump speed, the washing cycles can be extended or shortened, such that a lower mechanical cleaning effect is compensated by a longer interaction time or vice versa. Alternatively or additionally, the temperature of the circulated liquid is increased to compensate the reduced mechanical effect of the sprayed liquid.

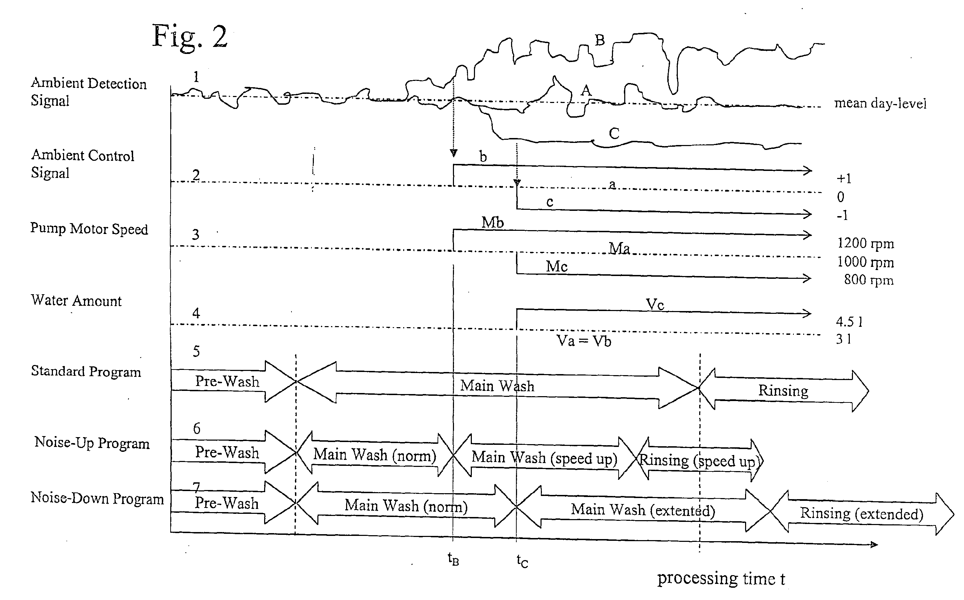

Fig. 2 shows a time behavior diagram of a detected ambient signal and a corresponding adaptation of a standard dishwashing program. The first line (line 1) in Fig. 2 shows the time behavior of the noise signal detected by the microphone unit 14 and fed to the fuzzy logic 12. Curve A shows the time behavior where the noise level swings around an average value, which is typical for a mean day level of the noise signal. Fuzzy logic 12 processes signal curve A by averaging, and outputs a noise control signal a as shown in line 2 of Fig. 2, which is fed to the control unit 4 for modifying the standard program. Since the signal level of average curve a is always zero, the control unit 4 does not modify the standard program shown in line 5 (depicting the respective periods of the subsequences of the standard program). The standard program has a pre-wash subsequence, a main wash subsequence and a rinsing subsequence. Since no modification is made on the standard program due to the noise detection curve A indicating no specific ambient conditions, the pump motor speed shown in line 3 of Fig. 2 is always nominal value Ma, which here means a rotation speed of 1000 rpm, if the pump is operated under the control of unit 4. The pump motor speeds shown in line 3 indicate the motor speed during the program sequence, if and while the circulation pump 8 is operated. This means that the circulation pump 8 is not operated all the time during the complete program sequence, but that it runs with a pumping speed of 1000 rpm, as soon as the circulation pump 8 is operated during execution the program sequence. Also, in case of noise signal A, the water amount 4 of the standard program (line 4) is Va (here for example 3 liters), which means that this is the water volume in the dishwasher 2 used during the main wash and controlled by the water level sensor 10.

Also Fig. 2 shows a noise level curve B where during the execution of the standard washing program some time before time t_{B} the microphone unit 14 detects an increase in the noise level as indicated by curve B. Due to the time averaging of the fuzzy logic 12 the ambient control signal shown in line 2 reacts with some delay to the increase in the noise level, and the step function b is output in response to the processing of noise level signal B by the fuzzy logic 12. Ambient control signal b jumps from value 0 before the detection of the increased noise level to value +1, when the increased noise level is positively detected, and this value +1 is fed to control unit 4. Ambient control signal b = +1 initiates a modification of the standard program to a noise-up program (line 6) becoming effective from time point t_{B}. This means that the standard program is executed until time point t_{B}, and from time t_{B} the standard program is modified to the noise-up program, which means that the main wash period remaining (this is from t_{B} to the start of the rinsing) is shortened. Also the rinsing subsequence is shortened as compared to the rinsing subsequence duration during the standard program. Therefore, as soon as a switch has been made to the noise-up program, the remaining subsequence portions (main wash portion) or complete subsequences (rinsing) are shortened, which results in an overall shortening of the program execution time of the noise-up program as compared to the standard program. Besides timing in the noise-up program, the nominal motor speed of the circulation pump 8 is increased from the standard value Ma (1000 rpm) to an increased speed of Mb (line 3), which is 1200 rpm here. As mentioned above, due to the increase of the circulation pump speed the mechanical effect of the circulated washing liquid is improved, such that washing total times can be reduced to achieve the same cleaning effect for the dishes.

Instead of processing the ambient noise level as shown in line 1 of Fig. 2, also the signal of a movement sensor can be processed by the fuzzy logic and/or the control unit 4 as mentioned above. Or, both signals can be combined, such that there are different degrees of noise increase levels (i.e. different degrees of noise-up programs) where, for example, if high noise level and no movements are detected, the highest noise increase level is achieved by the modification, while in presence of a high noise level and some repeated movement signals only an average noise increase level is achieved by modifying the standard program to a medium noise-up program.

Noise level curve C in line 1 of Fig. 2 exemplifies a noise level which can be found when a user finishes his day activities and goes to bed some time before the time point t_{c}. Again, due to the averaging effect of fuzzy logic 12, some time after the noise level goes below the average mean day level, the fuzzy logic 12 gives out the ambient control signal c (step function) to the control unit 4 modifying in response the standard program from time t_{c} to the noise-down program shown in line 7 of Fig. 2. The remaining washing program (main wash (extended)) is protracted and also the rinsing subsequence is protracted as compared to the respective durations during the standard program. By the modification from standard to noise-down program, the circulation pump motor speed is reduced from Ma to Mc as shown in line 3 of Fig. 2, wherein the nominal rotation speed is lowered from 1000 rpm to 800 rpm. Due to the reduced mechanical cleaning effect of the sprayed washing liquid the control unit 4 extends the time periods of the following partial subsequences (here main wash) or sequences (rinsing). At the same time, to avoid bubbles being circulated through the water conduits and spray arms, the water level or water amount is increased as shown in line 4. Here, as compared to the standard program (and also the noise-up program), the water amount is increased from Va=3 liters to Vc=4.5 liters of washing liquid. Thereby, the likelihood of sucking in water bubbles by the circulation pump 8 is reduced, and thereby the noise generation. The effect of switching from the standard program in line 5 to the noise-down program in line 7 can be compared to a user selection of a 'night-cycle' where the advantage of a reduced noise generation level of the dishwasher is compensated by an acceptable prolonged overall washing time.

Of course, the three examples (standard program/noise-up program/noise-down program) shown in Fig. 2 are not static and are changeable as soon as a modification from one to the other noise level has been detected. If, for example, an increased noise level B has been detected first, a modification from standard program to noise-up program is made as shown. If then, after a while, the noise level for example drops from B to reduce noise level C, a modification is made again, and the program sequence is switched from the noise-up program to the noise-down program, which means that the remaining partial subsequences and subsequences are first extended to the standard duration and then stretched to the extended duration necessary for the noise-down program. At the same time the increased motor speed is reduced from Mb=1200 rpm to Mc=800 rpm. The water amount is filled by control of the inlet valve 7 from Vb=3 liters to Vc=4.5 liters. An annoying and ineffective switching or modifying between different modified program sequences can be avoided by correspondingly programming the fuzzy logic (for example correspondingly long averaging time). It is also to be noted that a modification to the standard program in line 5 can be made continuously: modifying for example monotonously dependent from an averaged noise signal instead of a step-like (digital) behavior as shown in the embodiment of Fig. 2. Also, if, for example, a modification is made from the noise-down program to the noise-up program or to the standard program the increased water amount Vc during the noise-down program may be reduced to the standard water amount Va by activating the drain pump 6 as long as the reduced water amount Va is achieved. Or, it can also be defined that a previous modification is not deleted or compensated, for example that the higher water amount Vc does not harm the washing result, when a switch from the noise-down program is made to the standard or noise-up program.

### REFERENCE NUMERAL LIST

- 2: dishwasher
- 4: central control unit
- 6: drain pump
- 7: inlet valve
- 8: circulation pump
- 10: water level sensor
- 12: fuzzy logic
- 12a: I/O unit
- 12b: comparator unit
- 13: front panel
- 14: microphone unit
- 15: user input unit
- 16: photo detector
- 17: operation panel
- 18: movement detector
- 20: internal noise/vibration sensor
- 22: fan
- 24: heater
- 26: timer
- 30: front side

## Claims

1. Domestic dishwasher (2), dryer or washing machine, comprising:
a control unit (4, 12) adapted to control at least one program sequence of the domestic dishwasher (2), dryer or washing machine; and
at least one ambient condition sensor (14, 16, 18) adapted to detect an ambient condition of the surroundings outside the domestic dishwasher (2), dryer or washing machine and to supply an ambient sensor signal (A, B, C; a, b, c) to the control unit (4, 12);
**characterized in that** the control unit (4, 12) is adapted to modify at least one first program parameter in dependency of the at least one ambient sensor signal (A, B, C; a, b, c) and to modify at least one second program parameter in dependency of the modification of the at least one first program parameter.

2. Domestic dishwasher, dryer or washing machine according to claim 1, wherein the at least one first program parameter (Ma, Mb, Mc; Va, Vb, Vc) includes one or more of the following parameters: a fluid amount; a fluid level (Va, Vb, Vc), in particular a water level in a sink of a dishwasher or in a tub of a washing machine; a residual water level; a fluid flow rate, in particular a fluid circulation flow rate and/or a fluid inlet flow rate; an airflow rate, in particular a flow rate of the air passed through a drum of a dryer; a draining and/or pumping time; a fluid filling time; and a motor speed (Ma, Mb, Mc).

3. Domestic dishwasher, dryer or washing machine according to claim 1 or 2, wherein the at least one second program parameter comprises one or more of the following: a fluid temperature; an air temperature; a duration of the modified program sequence or a subsequence of the modified program sequence; a fluid amount (Va, Vb, Vc); a fluid level (Va, Vb, Vc); a fluid flow rate; an air flow rate; a detergent concentration; and a fluid composition.

4. Domestic dishwasher, dryer or washing machine according to any of the preceding claims, wherein the control unit (4, 12) is adapted to increase or reduce one or more of the following program sequence parameters in response to control a noise generating or inducing component (6, 7, 8, 22) to operate at a reduced or increased noise generating or inducing level (Mc), respectively: to increase or reduce a fluid and/or air temperature; to increase or reduce a number of washing and/or rinsing stages; to increase or reduce at least one washing, drying and/or rinsing time period of the program sequence; to increase or reduce a wash or rinse fluid amount (Vc); and to increase or reduce a detergent concentration.

5. Domestic dishwasher, dryer or washing machine according to any of the preceding claims, wherein the at least one ambient condition sensor (14, 16, 18) is one or more of the following sensors: an optical detector (16), a sound detector (14), a vibration detector and a motion detector (18).

6. Domestic dishwasher, dryer or washing machine according to any of the preceding claims, comprising a clock unit (26) indicative of the time of the day and/or the day of the week, wherein the control unit (4, 12) is further adapted to modify at least one of the program sequences in dependency of the ambient sensor signal (A, B, C; a, b, c) and an indicated day time and/or week day.

7. Domestic dishwasher, dryer or washing machine according to any of the preceding claims, wherein the control unit (4, 12) is adapted to modify the operation condition of at least one noise generating or inducing component (6, 7, 8) controlled by the control unit (4, 12) during the at least one modified program sequence.

8. Domestic dishwasher, dryer or washing machine according to any of the preceding claims, comprising at least one internal condition sensor (20) adapted to detect a condition internal to the domestic dishwasher, dryer or washing machine (2) and to provide an internal sensor signal to the control unit (4, 12) and/or a comparator unit (12b).

9. Domestic dishwasher, dryer or washing machine according to any of the preceding claims, comprising a user operable input unit (15) connected to the control unit (4, 12), wherein the control unit is adapted to receive a signal from the input unit (15) and to modify the at least one program sequence additionally in dependency of a user input.

10. Method of operating a domestic dishwasher (2), dryer or washing machine according to any of the preceding claims, comprising:
detecting at least one ambient condition (A, B, C; a, b, c) of the surroundings outside the domestic dishwasher (2), dryer or washing machine using at least one ambient condition sensor (14, 16, 18);
modifying at least one first program sequence parameter in dependency of the at least one detected ambient sensor signal (A, B, C; a, b, c); and
modifying at least one second program parameter in dependency of the modification of the at least one first program parameter.

11. Method according to claim 10, wherein the modification of the at least second program parameter (Va, Vb, Vc) is adapted to compensate for an operation result change of the domestic dishwasher, dryer or washing machine resulting from the modification of the first program parameter (Ma, Mb, Mc).

12. Method according to claim 10 or 11, wherein the detection and modification step is executed permanently, once or repeatedly during the program sequence.

13. Method according to any of claims 10 to 12, wherein the at least one ambient sensor signal is one or more of the signals: an optical detector signal, a sound detector signal (A, B, C; a, b, c), a vibration detector signal and a motion detector signal.

14. Method according to any of claims 10 to 13, wherein the step of modifying at least one first program sequence parameter comprises modifying the operation condition (Ma, Mb, Mc) of at least one noise generating or inducing component (6, 7, 8, 22) of the domestic dishwasher, dryer or washing machine operative during the at least one modified program sequence.

15. Method according to any of claims10 to 14, wherein the at least one modified program sequence or program sequence parameter is modified in dependency of at least one internal sensor signal in addition to the at least one ambient sensor signal (A, B, C; a, b, c).
